# EUROPEAN PATENT APPLICATION

(11) **EP 3 527 305 A1**
(43) Date of publication of application: **21.08.2019**
(21) Application number: 16919389.3
(22) Date of filing: 15.12.2016
(51) Int. Cl.: B22D 41/54, B22D 11/103, C04B 35/48, C04B 35/64, C04B 35/486

(54) **NOZZLE AND MANUFACTURING METHOD THEREFOR**

(30) Priority: 17.10.2016 KR 20160134366
(71) Applicant: Posco, Pohang-si, Gyeongsangbuk-do 37859 (KR)
(72) Inventor: KIM, Wook, Pohang-si Gyeongsangbuk-do 37590 (KR)
(74) Representative: Zech, Stefan Markus
(86) International application number: PCT/KR2016/014738
(87) International publication number: WO 2018/074659

(57) **Abstract**

A nozzle according to the present invention comprises: a nozzle body having an internally hollow part through which molten steel can move, and having a discharge port through which the molten steel can move to the outside of the internally hollow part, and a liner provided so as to surround at least a part of the inner wall of the nozzle body, wherein the liner is made of a raw material comprising calcium oxide (CaO) stabilized zirconia (CSZ) and a sintering additive for inducing sintering of calcium oxide (CaO) stabilized zirconia (CSZ). Thus, according to the embodiments of the present invention, a liner is manufactured by using a sintering additive in a solid electrolyte to induce sintering of the solid electrolyte, such that it is possible to prevent the deterioration of oxygen ion conductivity or improve oxygen ion conductivity as compared to the prior art. In addition, since graphite (C) is not contained in the raw material for producing the liner according to the embodiments of the present invention, it is not necessary to coat an inner wall surface with an antioxidant. Therefore, it is possible to prevent the problem of oxygen ion conductivity deterioration caused by the antioxidant.

## Description

### TECHNICAL FIELD

The present disclosure herein relates to a nozzle and a method for manufacturing the same, and more particularly, to a nozzle, in which nozzle clogging is suppressed, and a method for manufacturing the same.

### BACKGROUND ART

The continuous casting process is a process in which a ladle containing a completely refined molten steel is mounted on a continuous casting apparatus, the liquid-state molten steel is changed into a solid-state cast slab while moving from the ladle to a mold via a tundish. At this point, an immersion nozzle is located under the tundish to move the molten steel from the tundish to the mold, is immersed in the molten steel to be in contact with the molten steel for a long time, and hence requires excellent durability. The immersion nozzle is mainly formed of an Al₂O₃-C material obtained by combining an alumina (Al₂O₃), having excellent fire resistance and corrosion resistance against molten steel, and graphite (C) having a small wettability against an inclusion (slag component), a small expansion amount, and excellent thermal conductivity.

The immersion nozzle is a cylindrical refractory object functioning as a flow path for supplying the molten steel in the tundish to the mold. While the molten steel moves into the immersion nozzle, a clogging layer grows in a direction toward the center of the nozzle from the inner wall of the nozzle due to a temperature drop, an interface reaction at the interface between the molten steel and the inner wall of the nozzle, adhesion of inclusions to the inner wall of the nozzle, and the like. Such a nozzle clogging phenomenon causes a disconnection in the continuous casting process and exerts a bad influence such as decreases in the productivity and quality of the cast slab.

Accordingly, in order to prevent the nozzle clogging, efforts to reduce the nozzle clogging have been continued by introducing: a porous immersion nozzle, in which an inert gas is supplied from the inside of the nozzle to the molten steel to prevent the adhesion of inclusion by using air bubbles; a melted vanish nozzle in which a refractory object is introduced which reacts with aluminum oxide, which is a representative oxide causing nozzle clogging, and forms a low-meting point compound and a nozzle clogging layer is melted down together with the nozzle material; and a refractory material which suppresses adhesion of inclusions and a contact with the molten steel.

In addition, another method for preventing the nozzle clogging is a deoxidizable nozzle in which the nozzle clogging is reduced by installing a liner containing a solid electrolyte which can be deoxidized at an interface so that the generation of an oxide occurring at the interface between the nozzle and the molten steel. ZrO₂-based composite oxides are widely used as the solid electrolyte used for the material of the liner, and graphite (C) is further added to secure formability of the liner and the stability at the continuous casting process temperature.

However, when graphite is contained in the liner, there is a limitation that the oxygen permeability toward the liner may be lost due to the high electrical conductivity of the graphite. In addition, the added graphite is present at zirconia grain boundaries and interferes with sintering during firing and casting process, and thus, a problem occurs in that oxygen ion conductivity is remarkably decreased. In addition, the decrease in the oxygen ion conductivity acts as a reason why the speed of removing oxygen through the liner is lower than the speed of supplying oxygen that is diffused and supplied to the interface in the molten steel. Accordingly, the deoxidizing reaction decreases at the interface between the liner and the molten steel, and thus, nozzle clogging occurs due to the generation of oxides at the interface.

### DISCLOSURE OF THE INVENTION

### TECHNICAL PROBLEM

The present disclosure herein provides a nozzle in which nozzle clogging is suppressed and a method for manufacturing the same.

The present disclosure also provides a nozzle provided with a liner having high oxygen ion conductivity and a method for manufacturing the same.

### TECHNICAL SOLUTION

In accordance with an exemplary embodiment, a nozzle includes: a nozzle body having an inner hole part, through which molten steel is movable, and a discharge port through which the molten steel is movable to an outside of the inner hole part; and a liner manufactured by using a material containing calcium oxide (CaO) stabilized zirconia (CSZ) and a sintering additive configured to induce sintering of the calcium oxide (CaO) stabilized zirconia (CSZ), and installed so as to surround at least a portion of an inner wall of the nozzle body.

The sintering additive may be contained in a content of greater than 0 mol% and no greater than 10 mol%.

Any one of Bi₂O₃, Al₂O₃, or Fe₂O₃ may be used as the sintering additive.

When the sintering additive is Bi₂O₃, a Bi₂O₃ content may favorably be no greater than 5 mol%, when the sintering additive is Al₂O₃, an Al₂O₃ content may favorably be at least 0.1 mol% and no greater than 10 mol%, and when the sintering additive is Fe₂O₃, an Fe₂O₃ content may favorably be at least 0.1 mol% and no greater than 5 mol%.

In accordance with another exemplary embodiment, a method for manufacturing a nozzle includes: preparing a material for manufacturing a nozzle body having an inner hole part through which molten steel is movable and a discharge port through which the molten steel is movable to an outside of the inner hole part; preparing a liner installed so as to surround at least a portion of an inner wall of the nozzle body; and injecting the material for manufacturing the nozzle body and the material for manufacturing the liner into a forming mold for manufacturing the nozzle and firing the materials, wherein the material for manufacturing the liner includes a calcium oxide (CaO) stabilized zirconia (CSZ) and a sintering additive configured to induce sintering of the calcium oxide (CaO) stabilized zirconia (CSZ).

In the preparing the material for manufacturing the liner, the sintering additive content may be no greater than 10 mol% with respect to a total material for manufacturing the liner.

In the preparing the material for manufacturing the liner, any one of Bi₂O₃, Al₂O₃, or Fe₂O₃ may be used as the sintering additive.

In the preparing of the material for manufacturing the liner, when the sintering additive is Bi₂O₃, a Bi₂O₃ content may favorably be no greater than 5 mol%, when the sintering additive is Al₂O₃, an Al₂O₃ content may favorably be at least 0.1 mol% and no greater than 10 mol%, and when the sintering additive is Fe₂O₃, an Fe₂O₃ content may favorably be at least 0.1 mol% and no greater than 5 mol%.

In the firing, firing may favorably be performed at a temperature no higher than 1,000°C.

### ADVANTAGEOUS EFFECTS

In accordance with exemplary embodiments, a liner is manufactured by using a sintering additive for a solid electrolyte to induce sintering of the solid electrolyte, and thus, a decrease in oxygen ion conductivity may be prevented, or the oxygen ion conductivity may be improved compared to related arts.

In addition, since graphite (C) is not contained in the material for manufacturing a liner according to exemplary embodiments, it is not necessary to apply antioxidant onto an inner wall. Thus, it is possible to prevent occurrence of a problem in which the oxygen ion conductivity is decreased by the antioxidant.

### BRIEF DESCRIPTION OF THE DRAWINGS

FIG. 1 is a schematic view showing a casting apparatus to which a nozzle according to an exemplary embodiment is applied.
FIG. 2 is a cross-sectional view of a nozzle in accordance with an exemplary embodiment.
FIG. 3 is a schematic view of a deoxidizing reaction occurring at an inner hole part of a nozzle during casting.
FIG. 4 is a sample photograph of a liner manufactured through a method in accordance with an exemplary embodiment.
FIG. 5 is a measurement result of ion conductivity of liner samples manufactured in accordance with examples and a comparative example.
FIG. 6 is a photograph of a transverse cross-section, the photograph showing a state in which the liner sample manufactured by a method in accordance with an exemplary embodiment is installed on an inner wall of a nozzle body.

### MODE FOR CARRYING OUT THE INVENTION

Hereinafter exemplary embodiments will be described in more detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. In descriptions, like reference numeral refer to like configuration, figures may be partially exaggerated for clarity of illustration of exemplary embodiments, and like reference numerals refer to like elements in figures.

Firstly, a nozzle in accordance with an exemplary embodiment may be used when pouring or supplying various high-temperature fluids into another container. In the exemplary embodiment, an immersion nozzle, which supplies molten steel from a tundish to a mold when performing casting for manufacturing a cast slab, will be described.

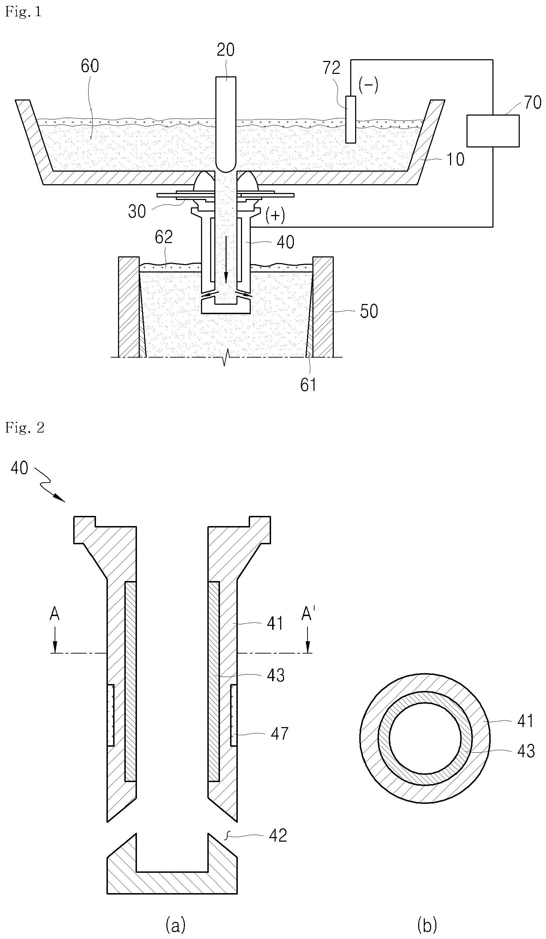

FIG. 1 is a schematic view showing a casting apparatus to which a nozzle according to an exemplary embodiment is applied. FIG. 2 is a cross-sectional view of a nozzle in accordance with an exemplary embodiment; [29]
Referring to FIG. 1, a casting apparatus, for example, a continuous casting apparatus may include: a tundish 10 which functions to store and distribute molten steel 60 from a ladle which is a container for containing the refined molten steel; a stopper 20 and a sliding plate 30 which control the flow rate of the molten steel 60; an immersion nozzle 40 which discharges the molten steel 60 to a mold 50; and the mold 50 which solidifies the molten steel 60 to manufacture a cast slab 61. FIG. 1 illustrates that the stopper 20 and the sliding plate 30 are simultaneously provided to control the flow rate of the molten steel, but in an actual operation, either of the stopper 20 or the sliding plate 30 may be used. In addition, the casting apparatus may include a power supply part 70 for applying a voltage to the molten steel inside the tundish 10 and the immersion nozzle 40.

Referring to FIG. 2, the immersion nozzle 40 may include: a nozzle body 41 which has an inner hole part through which the molten steel may move and a discharge port 42 through which the molten steel may move to the outside, for example, to the mold 50; and a liner 43 which is provided to surround at least a portion of an inner wall of the nozzle body 41 and contains calcium oxide (CaO) stabilized zirconia (CaO stabilized ZrO2, CSZ) and a sintering additive. In addition, the immersion nozzle 40 may also include a slag line part 47 which surrounds at least a portion of an outer wall of the nozzle body 41.

The nozzle body 41 may be formed in a cylindrical shape having at least an open upper portion so as to have the inner hole part through which the molten steel may move. In addition, the discharge port 42 through which the molten steel may be discharged from the inner hole part to the outside may be formed in a lower portion of the nozzle body 41. The nozzle body 41 may be formed by using a material (Al₂O₃-C) containing Al₂O₃ and C. Here, C imparts conductivity to the nozzle body 41 which may be formed so as to include approximately 20 wt% to approximately 30 wt% of C. Adding C into a material which constitutes the nozzle body 41 is for forming a conductive circuit between the immersion nozzle 40 and the molten steel flowing along the immersion nozzle 40.

The liner 43 is formed on the inner wall of the nozzle body 41 so that the surface thereof may come into contact with the molten steel. More specifically, the liner 43 is inserted and installed into the nozzle body 41 so that the inner wall surface thereof is exposed to the inner hole part and comes into contact with the molten steel flowing along the inner hole part while surrounding the inner hole part of the nozzle body 41 through which the molten steel passes.

In addition, the liner 43 may also be formed across the entirety of the inner wall of the nozzle body 41, but may be formed from an upper side of the nozzle body 41 to the upper portion of the discharge port 42. Accordingly, the liner 43 may be formed inside the nozzle body 41 in a hollow cylinder shape which is open in upward and downward directions along the inner wall of the nozzle body 41.

The liner 43 functions to move oxygen ions in the molten steel toward the nozzle body 41 side. That is, the liner 43 has a deoxidizing function for removing oxygen present in an interface contacting the molten steel and should maintain a low interface oxygen concentration during a casting process. Accordingly, for the liner 43, a composite oxide based on zirconia (ZrO2) is used, which is a solid electrolyte material having excellent ion conductivity and selective permeability against oxygen ions, and which is electrochemically deoxidizable. Here, the zirconia (ZrO2)-based composite oxide is applied to a solid fuel cell (SOFC), a probe for measuring the content of oxygen in the molten metal, and the like.

In an exemplary embodiment, calcium oxide (CaO) stabilized zirconia (CSZ) having a low thermal expansion coefficient at high temperatures is included in the zirconia (ZrO2)-based solid electrolyte used for a material for manufacturing the liner. In addition, a sintering additive for inducing a sintering reaction in the calcium oxide (CaO) stabilized zirconia (CSZ) is further included. That is, in the material for manufacturing the liner in accordance with an exemplary embodiment, the graphite (C) which has been added for formability and high-temperature stability in related arts is not used, and the sintering additive is added in place of the graphite, and thus, a decrease in oxygen ion conductivity of the solid electrolyte (that is, the CSZ) due to the graphite (C).

Meanwhile, in related arts, graphite (C) was added to a calcium oxide stabilized zirconia (CSZ) for formability and high-temperature stability to manufacture a liner. However, when graphite (C) is included in the liner, the oxygen ion conductivity of the zirconia (ZrO2)-based solid electrolyte decreases due to a high electrical conductivity of the graphite (C). That is, the added graphite (C) is present at grain boundaries and hence interferes with sintering between zirconia powder particles by heat generated during a firing process or a casting process when manufacturing the liner 43. This acts as a cause for generating a great number of pores in the solid electrolyte, and since the pores interferes with the oxygen ion conduction, the oxygen ion conductivity of the solid electrolyte decreases as much as the increase in the amount of pores.

Thus, in the exemplary embodiment, sintering reactions between zirconia powder particles are induced, and the sintering additive, which may ensure formability and high-temperature stability of the liner without decreasing the oxygen ion conductivity, is added to the material for manufacturing the liner. In other words, the material for manufacturing the liner does not include graphite in related arts, but includes the calcium oxide (CaO) stabilized zirconia (CSZ) and the sintering additive.

In order to suppress nozzle clogging by using the liner, the speed of removing oxygen or the deoxidizing speed at the liner should be higher than the speed at which oxygen in the molten steel is diffused to the interface with the liner and is supplied or moved. In addition, to this end, the critical oxygen ion conductivity of the liner was calculated to be 0.01 S/cm.

To this end, in the exemplary embodiment, when the entirety of the material for manufacturing the liner is 100 mol%, a solid electrolyte is to be included which includes the sintering additive of greater than 0 mol% and no greater than 10 mol%, and the remainder of calcium oxide (CaO) stabilized zirconia (CSZ). More specifically, at least 0.1 mol% and no greater than 10 mol% of the sintering additive is contained, and at least 90 mol% and no greater than 99.9 mol% of the solid electrolyte, which is the calcium oxide (CaO) stabilized zirconia (CSZ), is contained.

For example, when more than 10 mol% of the sintering additive is contained, the content of the solid electrolyte is small and the oxygen ion conductivity is as low as being less than 0.01 S/cm, and thus, nozzle clogging may be caused. In addition, when the content of the sintering additive is less than 0.1 mol%, the sintering inducing capability of the solid electrolyte due to the sintering additive is small, and the oxygen ion conductivity is as low as being less than 0.01 S/cm due to pores generated in the solid electrolyte, and thus, nozzle clogging may be caused.

It is known that the required temperature for sintering of the zirconia (ZrO₂)-based solid electrolyte powder is at least 1,400°C, and when the temperature of Al₂O₃ which is a material for the nozzle body 41 is raised so as to exceed 1,000°C, a great amount of cracks may be generated in the nozzle body 41 during a firing process. Accordingly, in the exemplary embodiment, a sintering additive is used which may lower the sintering temperature (sintered temperature) of the zirconia (ZrO₂)-based solid electrolyte powder to be no greater than 1,000°C. Accordingly, in the exemplary embodiment, while inducing a sintering reaction between zirconia powder particles, any one of Bi₂O₃, Al₂O₃, or Fe₂O₃ is used as the sintering additive so as to lower the sintering temperature to be at least 1,000°C.

In using any one of Bi₂O₃, Al₂O₃, or Fe₂O₃ is used as the sintering additive, no greater than 5 mol% of the Bi₂O₃, no greater than 10 mol% of the Al₂O₃, and no greater than 5 mol% of the Fe₂O₃ may favorably be contained. More specifically, at least 0.1 mol% and no greater than 5 mol% of Bi₂O₃, at least 0.1 mol% and no greater than 10 mol% of Al₂O₃, and least 0.1 mol% and no greater than 5 mol% of Fe₂O₃ may favorably contained.

As described above, in the exemplary embodiment, the calcium oxide (CaO) stabilized zirconia (CSZ) and the sintering additive are used to manufacture the liner 43, and the sintering between the particles of the calcium oxide (CaO) stabilized zirconia (CSZ), and thus, a decrease in the oxygen ion conductivity may be prevented or the oxygen ion conductivity may be improved compared to those in the related arts. Alternatively, the oxygen ion conductivity of the liner is made to be at least 0.01 S/cm, and thus, the speed of removing oxygen from the liner 43 or the deoxidizing speed is made to be higher than the oxygen supply speed at which the oxygen in the molten steel is diffused and supplied to an interface with the liner.

Thus, the oxygen ion conductivity at which oxygen ions are moved or induced toward the nozzle body 41 side is at least 0.01 S/cm, and thus, the oxygen removing speed at which oxygen ions are moved or induced toward the nozzle body 41 side becomes higher than the oxygen supply speed at which oxygen in the molten steel is diffused and supplied to the inner wall of the immersion nozzle and the interface. Thus, a low oxygen content may be maintained between the inner wall of the immersion nozzle and the interface of the molten steel, and accordingly, generation of inclusions, for example, metal oxides such as SiO₂, Al₂O₃, and TiO₂ may be suppressed or prevented.

Meanwhile, as in related arts, when manufacturing the liner using a raw material including a solid electrolyte and graphite (C), a phenomenon in which C was burnt or burnt and oxidized or a decarburizing reaction occurred in a preheating process of an immersion nozzle, and thus, there was a limitation that pores are generated and the strength of the immersion nozzle decreased. Accordingly, in order to prevent the limitation, an antioxidant was applied to the inner wall surface of the liner. However, Bi₂O₃ contained in the antioxidant reacts with a ZrO₂-based solid electrolyte at a temperature of at least 1,000°C and acts as a cause for decreasing oxygen ion conductivity.

However, in the exemplary embodiment, since graphite (C) is not contained in the material for manufacturing the liner 43, it is not necessary to apply an antioxidant onto the inner wall of the liner 43. Thus, a problem does not occur in which the oxygen ion conductivity of the antioxidant decreases due to Bi₂O₃.

A mechanism for suppressing the generation and adhesion of a metal oxide will be described as follows.

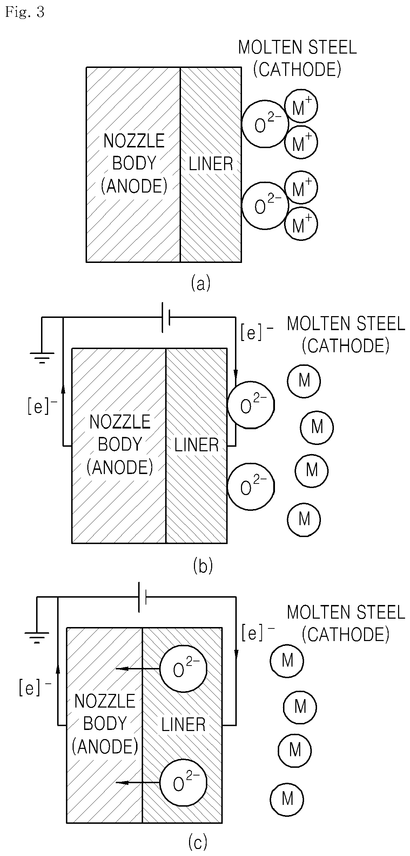

Referring to (a) of FIG. 3, oxygen contained in the molten steel during casting forms a metal oxide and moves to the inner wall of a nozzle body 41. In addition, as shown in (b) of FIG. 3, when the molten steel and the nozzle body 41 are electrically connected, electrons concentrated to the vicinity of the metal oxide decomposes the metal oxide into oxygen ions and positive ions (metal ions). The oxygen ions decomposed as such moves toward the nozzle body 41 side through a liner 43 having excellent oxygen ion conductivity as shown in (c) of FIG. 3, are extracted through pores of the nozzle body 41, and are discharged to the outside while generating an oxygen gas. In addition, the positive ions are absorbed into the molten steel. Such a process, that is, oxygen in the molten steel is discharged to the outside of the molten steel through a deoxidizing reaction, the generation and adhesion of the metal oxide inside the immersion nozzle 40 are thereby suppressed, and thus, nozzle clogging may be suppressed or prevented.

In addition, the liner in accordance with an exemplary embodiment may reduce or further suppress the problem of a decrease in oxygen ion mobility due to the graphite (C) and nozzle clogging due to the decrease by adding a sintering additive, in place of the graphite (C) in related arts, to a calcium oxide (CaO) stabilized zirconia (CSZ). That is, sintering of the calcium oxide (CaO) stabilized zirconia (CSZ) is induced according to the temperature of the molten steel when manufacturing the liner using a sintering additive and when performing casting, and thus, the oxygen ion conductivity, by which oxygen ions are moved or induced to the nozzle body 41 side, is improved compared to that in the related arts. Thus, the oxygen removing speed at which oxygen ions are moved or induced toward the nozzle body 41 side becomes higher than the oxygen supplying speed at which oxygen in the molten steel is diffused and supplied to an inner wall of the immersion nozzle and an interface. Thus, a low oxygen content may be maintained between the inner wall of the immersion nozzle 40 and the interface of the molten steel, and accordingly, generation of inclusions, for example, metal oxides such as SiO2, Al₂O₃, and TiO₂ may be suppressed or prevented.

The slag line part 47 is formed on an upper side of the discharge port 42, for example, in the vicinity of the melt surface of the molten steel in a mold, and raises corrosion resistance against slag, a flux, the molten steel, and the like. The slag line part 47 may be formed by using various substances, and may be formed by using, for example, a substance mixture such as calcia-magnesia partially stabilized zirconia and graphite.

The power supply part 70 causes the molten steel inside the tundish 10 and the molten steel to be electrically connected. Accordingly, a first electrode 72 for applying power to the molten steel inside the tundish may be provided, and the immersion nozzle 40 may be used as a second electrode. In order to apply power to the molten steel inside the tundish 10, the first electrode 72 may be provided to be immersed in the molten steel inside the tundish, and the first electrode 72 may be formed of the same material as the immersion nozzle 40, that is, the nozzle body 41. In addition, the power supply part 70 applies power, for example, a voltage or current, to the first electrode 72 and the second electrode (immersion nozzle 40), and power is applied with the first electrode 72 serving as a cathode and the second electrode serving as an anode. Accordingly, when power is applied to the first electrode 72 and the second electrode, electrons move from the first electrode 72 to the second electrode side, and oxygen ions decomposed at the interface between the molten steel and the immersion nozzle 40 move in the movement direction of the electrons, that is, from the molten steel toward the nozzle body 41 side. Thus, oxygen ions in the molten steel may move toward the nozzle body 41 side through the liner 43 and be discharged to the outside, and through such a process, occurrence of a phenomenon may be suppressed or prevented in which metal oxides adhere to the inner hole part of the immersion nozzle 40 and nozzle clogging thereby occurs.

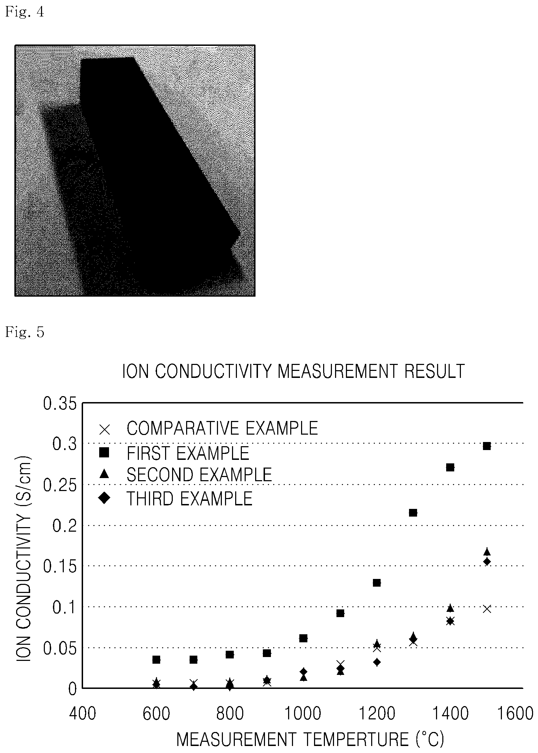

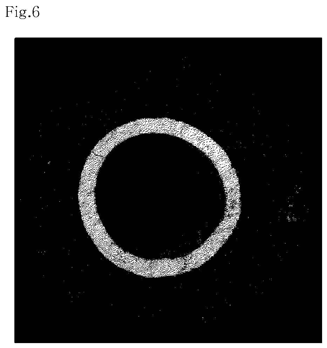

FIG. 4 is a sample photograph of a liner manufactured through a method in accordance with an exemplary embodiment. FIG. 5 is a measurement result of ion conductivity of liner samples manufactured in accordance with examples and a comparative example. FIG. 6 is a photograph of a transverse cross-section, the photograph showing a state in which the liner sample manufactured by a method in accordance with an exemplary embodiment is installed on an inner wall of a nozzle body.

The liner samples in accordance with examples were manufacture by adding each of Bi₂O₃, Al₂O₃, and Fe₂O₃ as a sintering additive to a calcium oxide (CaO) stabilized zirconia (CSZ) in a solid powder state and without adding graphite (C). At this point, 5 mol% of Bi₂O₃, 10 mol% of Al₂O₃, and 5 mol% of Fe₂O₃ were added. In addition, after forming powder in which the calcium oxide (CaO) stabilized zirconia (CSZ) and the sintering additive were mixed, a liner sample was manufactured by firing the powder at 950°C for three hours, and the oxygen ion conductivity of the liner sample was measured.

In addition, as a comparative example, without adding the calcium oxide (CaO) stabilized zirconia (CSZ) and the sintering additive, a liner sample was manufactured by firing the powder under the same conditions, that is, at 950°C for three hours, and the oxygen ion conductivity of the liner sample was measured.

In case of the liner sample in accordance with the comparative example, the liner sample is maintained at an unsintered state with a relative density of approximately 40%, but the liner sample in accordance with an example has a high relative density of 69% and the ion conductivity is high to be approximately 0.27 S/cm at 1,500°C.

Referring to FIG. 5, the liners in accordance with first to third examples and a comparative example show a tendency in which ion conductivity increases according to the measured temperature. In this case, from the measured temperature exceeding a temperature of 1,300°C, the ion conductivities of the liners in accordance with the first to third examples are larger than that in the comparative example. In particular, the oxygen ion conductivity while casting a cast slab is important for the liner, and the oxygen ion conductivity of the liners in accordance with the first to third examples are larger than that in the comparative example at a casting temperature of 1,500°C. In addition, it can be found that at a temperature exceeding the casting temperature of at least 1,500°C, the oxygen ion conductivity increases in the order of the first example (Bi2O3), the second example (Al₂O₃), the third example (Fe₂O₃), and the comparative example.

Hereinafter, a method for manufacturing a nozzle in accordance with an exemplary embodiment will be described.

A nozzle in accordance with an exemplary embodiment may include: preparing a material for forming an immersion nozzle 40; pouring a material in a mold for forming the immersion nozzle 40 and pressing the material to form a molded body; and firing the molded body to form the immersion nozzle 40.

The preparing of the material may include preparing a material for forming a nozzle body 41 and a material for forming a liner 43.

When the materials are prepared, each of the materials is injected in a mold and the molded body of the immersion nozzle 40 is formed. At this point, a cylindrical core material is inserted into the forming mold and a spacer for forming the liner 43 may be inserted so as to be spaced apart from the core material on the outside of the core material. Then, the material for forming the liner 43 is injected between the spacer and the core material, and the material for forming the nozzle body 41 is injected between the spacer and the forming mold. Then, after removing the spacer, the materials injected into the mold are pressed and the molded body for forming the immersion nozzle 40 is formed.

Then, the molded body is extracted from the forming mold, and the molded body is fired at a temperature of no higher than approximately 1,000°C to manufacture the immersion nozzle 40.

### INDUSTRIAL APPLICABILITY

In accordance with a nozzle and a method for manufacturing the nozzle of exemplary embodiments, a liner is manufactured by using a sintering additive for a solid electrolyte to induce sintering of the solid electrolyte, and thus, a decrease in oxygen ion conductivity may be prevented, or the oxygen ion conductivity may be improved compared to related arts. In addition, since graphite (C) is not contained in the material for manufacturing a liner according to exemplary embodiments, it is not necessary to apply an antioxidant onto an inner wall. Thus, it is possible to prevent occurrence of a problem in which the oxygen ion conductivity is decreased by the antioxidant.

## Claims

1. A nozzle comprising:
a nozzle body having an inner hole part, through which molten steel is movable, and a discharge port through which the molten steel is movable to an outside of the inner hole part; and
a liner manufactured by using a material containing calcium oxide (CaO) stabilized zirconia (CSZ) and a sintering additive configured to induce sintering of the calcium oxide (CaO) stabilized zirconia (CSZ), and installed so as to surround at least a portion of an inner wall of the nozzle body.

2. The nozzle of claim 1, wherein the sintering additive is contained in a content of greater than 0 mol% and no greater than 10 mol%.

3. The nozzle of claim 2, wherein any one of Bi₂O₃, Al₂O₃, or Fe₂O₃ is used as the sintering additive.

4. The nozzle of claim 3, wherein
when the sintering additive is Bi₂O₃, a Bi₂O₃ content is no greater than 5 mol%,
when the sintering additive is Al₂O₃, an Al₂O₃ content is at least 0.1 mol% and no greater than 10 mol%, and
when the sintering additive is Fe₂O₃, an Fe₂O₃ content is at least 0.1 mol% and no greater than 5 mol%.

5. A method for manufacturing a nozzle, the method comprising:
preparing a material for manufacturing a nozzle body having an inner hole part through which molten steel is movable and a discharge port through which the molten steel is movable to an outside of the inner hole part;
preparing a liner installed so as to surround at least a portion of an inner wall of the nozzle body; and
injecting the material for manufacturing the nozzle body and the material for manufacturing the liner into a forming mold for manufacturing the nozzle and firing the materials, wherein
the material for manufacturing the liner includes a calcium oxide (CaO) stabilized zirconia (CSZ) and a sintering additive configured to induce sintering of the calcium oxide (CaO) stabilized zirconia (CSZ).

6. The method of claim 6, wherein in the preparing the material for manufacturing the liner, the sintering additive content is no greater than 10 mol% with respect to a total material for manufacturing the liner.

7. The method of claim 6, wherein in the preparing the material for manufacturing the liner, any one of Bi₂O₃, Al₂O₃, or Fe₂O₃ is used as the sintering additive.

8. The method of claim 7, wherein in the preparing of the material for manufacturing the liner,
when the sintering additive is Bi₂O₃, a Bi₂O₃ content is no greater than 5 mol%,
when the sintering additive is Al₂O₃, an Al₂O₃ content is at least 0.1 mol% and no greater than 10 mol%, and
when the sintering additive is Fe₂O₃, an Fe₂O₃ content is at least 0.1 mol% and no greater than 5 mol%.

9. The method of any one of claims 5 to 8, wherein in the firing, the firing is performed at a temperature no higher than 1,000°C.
